# EUROPEAN PATENT APPLICATION

(11) **EP 0 860 263 A1**
(43) Date of publication of application: **26.08.1998**
(21) Application number: 98200585.2
(22) Date of filing: 25.02.1998
(51) Int. Cl.: B29C 45/72

(54) **A method of injection-moulding plastics materials, particularly hot cross-linking resins such as ethyl vinyl acetate and vulcanizable elastomers**

(30) Priority: 25.02.1997 IT PD970036
(71) Applicant: Ottogalli S.p.A., 35129 Padova (IT)
(72) Inventor: Ottogalli, Tarcisio, 35129 Padova (IT)
(74) Representative: Cantaluppi, Stefano

(57) **Abstract**

In order to injection-mould hot cross-linking resins, a press (P) is provided, and has a worm-screw plasticizer (100) and a nozzle (104) for the injection of the preselected plastics material into a mould (9), the mould (9) is arranged in a closure unit (101) with irreversible mechanical closure, the mould (9) is closed by the unit (101), and the resin is then injected into the mould (9), the resin is kept at a cross-linking temperature, and the mould (9) is opened after a predetermined cross-linking time; the temperature of the plastics material to be injected is kept at a level considerably below the cross-linking temperature in the plasticizer (100) and is heated to a temperature close to the cross-linking temperature as it passes through the nozzle (104), adopting a fluid state with low viscosity, in order to be injected into the mould (9) . The resin passing through the nozzle (104) is preferably heated by control of the injection pressure so that the resin is heated to the desired cross-linking temperature as a result of the injection pressure and the internal friction resulting from the pressure.

## Description

The present invention relates to a method of injection moulding plastics materials, particularly hot cross-linking resins such as ethyl vinyl acetate and vulcanizable elastomers.

In the commercial formulation conventionally used for producing certain expanded products, particularly soles for sports shoes, ethyl vinyl acetate-based resins have the property of cross-linking with a fairly violent expansion when the temperature of the mass reaches values of between 150° and 180°C. At this temperature, initially, they adopt a very low viscosity, that is, they are in a semi-liquid form, and then a rapid process of expansion and solidification starts. It is therefore essential to prevent the resin from reaching the cross-linking temperature whilst it is still in the worm-screw plasticizer of the injection press.

According to the technique used up to now, the resin in transit in the plasticizer is normally kept at a temperature below 90°C as far as the injector, so as to prevent the cross-linking process from starting in the injector. It is then forced into the mould which is kept at about 170°C, where it undergoes the necessary heating to start the cross-linking process. This cross-linking takes place progressively from the outside of the shape being moulded, which is in contact with the mould, towards its centre.

However, at 80-90°C, the resin has a high viscosity which results in large pressure losses along the injection path, considerably slowing the process and making it difficult to fill the mould completely. On the other hand, the considerable viscosity of the resin prevents "water hammer" phenomena upon closure of the injection nozzle and consequent risks of damage to the mould support, or the formation of any flash owing to partial separation of the two half-moulds as a result of the instantaneous excess pressures resulting from the sudden closure of the injection nozzle.

Substantially similar problems may be encountered in the injection-moulding of vulcanizable elastomers such as natural or synthetic rubbers, particularly for the moulding of thin-walled items which are very elongate in a dominant direction. For example, up to now, it has been impossible to produce natural or synthetic rubber boots by injection moulding since these elastomers have poor fluidity at normal injection temperatures and are therefore unable to achieve homogeneous filling of mould cavities of relatively large dimensions and little depth.

The production of such boots lined with a fabric "sock" has up to now been even more difficult. As well as leading to partial opening of the mould owing to excess pressure and consequent formation of unacceptable flash, the very high pressure required to overcome the viscosity of the rubber causes tearing and/or wrinkling of the fabric sock, compromising the quality of the product produced. Up to now, these boots have therefore been produced by the application of suitably cut crude rubber sheets to a form which is subsequently placed in an autoclave for vulcanization.

The present invention makes use of the characteristics offered by a special closure unit for presses produced by the Applicant and forming the subject of patent application No. PD95A000153 (the contents of which are incorporated herein by reference) in order to establish an injection method which overcomes all of the problems complained of with reference to the prior art mentioned. The patent application cited above in fact proposes a closure unit which combines all of the advantages of mechanical and hydraulic closures, at the same time eliminating the disadvantages resulting therefrom, particularly the reversibility of the closure operation under load and the slowness of the opening of the mould upon completion of the injection.

Closure units (briefly "closures") operating purely hydraulically in fact have the advantage of being able to apply a high closure load between the half-moulds, but this is offset by a tendency to retract the closure piston when the pressure in the mould rises to high peak values. In practice, they permit a reverse movement of the moulds under the effect of the injection pressure. With pressure peaks such as those resulting from "water hammer" phenomena, this retraction may lead to a small displacement of the half-moulds which causes the formation of troublesome flash on the moulded shape. Moreover, these closure units are unsuitable for the moulding of EVA both because of the very high flow-rates of pressurized oil required for correct operation and because of the relative slowness of the movement of the half-moulds during the opening stage upon completion of the injection.

In contrast, the closure unit described in patent application No. PD95A000153 has the advantage of being able to apply considerable clamping loads between the moulds, whereas its operation cannot be reversed under load, that is, it is not subject to displacements of the inclined-plane device of the clamping means of the mould in the direction in which the mould is opened, even under the effect of high pressures such as those typically developed with "water hammer" phenomena.

At the same time, the sides of the unit which serve to constitute mechanical ties for withstanding the injection pressure can yield resiliently under load if, because of errors in the regulation of the injection parameters of the press, pressure peaks such as to lead to damage to the mould or to the closure unit are reached in the mould.

In this case, owing to slight resilient yielding of the sides, an instantaneous and correspondingly slight separation of the two half-moulds is permitted so that the instantaneous excess pressure is immediately discharged in the form of leakage of resin from the mould.

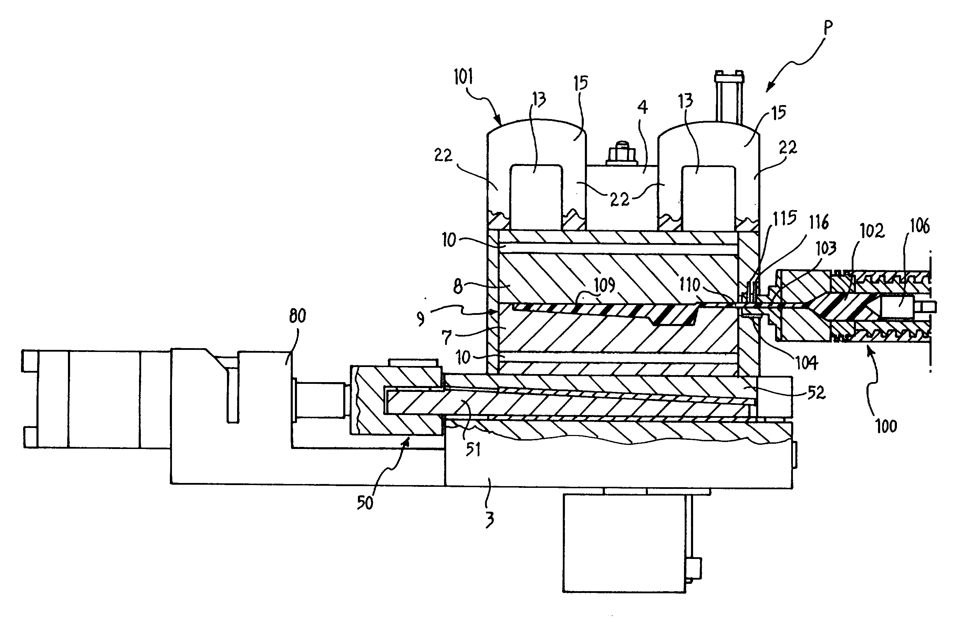

The invention will now be described further with reference to an embodiment thereof, described by way of nonlimiting example, with reference to the appended drawing, of which the sole figure is a partially-sectioned schematic view of a press for the injection-moulding of plastics materials, during the moulding stage.

In the drawing, a press P for the injection-moulding of plastics materials, having a worm-screw plasticizer, indicated 100, defines a plasticizing chamber 102 communicating with an injection duct 103 which extends into a nozzle 104. The molten plastics material is urged into the duct 103 by a piston 106 movable in the plasticizing chamber 102 in known manner.

The press P further comprises a closure unit 101 for clamping together the two half-moulds 7, 8 which jointly define an openable mould 9, the mould cavity 109 of which is to receive the molten plastics material supplied from the nozzle 104 via an injection duct 110.

The unit 101 is of the type described in patent application No. PD95A000153, the contents of which, as indicated above are incorporated into the present description by reference. For the same reason, the description of this unit 101 will be given with the use of the same reference numerals which identify the corresponding details in the aforementioned patent application.

Two plates 3, 4, mounted in facing positions, are shown in the closure unit 101, the upper plate 4 being movable away from and towards the lower plate by means of jacks, not shown.

Plate-shaped elements 10 such as heating members, pads and/or spacers for known use are interposed between each plate 3, 4 and the corresponding half-mould 7, 8.

The plates are also connected to one another releasably by means of sides 15 hinged on the lower plate 3 and capable of mutual engagement with projections 13 of the upper plate 4.

For this engagement, the sides bear columnar elements 22 of predetermined cross-section.

The closure unit 101 further comprises an inclined-plane clamping device 50 with a first and a second wedge-shaped element 51, 52 slidable upon one another under the action of a hydraulic jack 80. The angle of inclination selected for the inclined plane is such that the pressure exerted between the surfaces of the inclined plane has a predominant component in the direction in which the clamping load is applied between the half-moulds and that the other component is in any case overcome by friction so that, when the jack 80 is not operated, no sliding takes place between the wedge-shaped elements 51, 52, irrespective of the clamping load exerted on the mould 9.

In other words, the action of the clamping device is irreversible, even if the operating pressure of the jack 80 is removed.

A probe for monitoring the injection pressure is indicated 115; a probe for monitoring the temperature of the resin during the injection stage is indicated 116.

The injection stage as a whole is preferably controlled by monitoring of the temperature and pressure parameters. This is carried out by means of a microprocessor supplied with the temperature and pressure signals detected by the probes 115 and 116.

According to the method of the invention, the plastics material supplied conventionally to the plasticizer is melted and kept at a temperature no higher than about 90°C. During supply to the injection nozzle, the injection pressure is regulated so that the temperature of the resin is raised, as a result of the pressure and of the internal friction and by friction with the walls of the nozzle, possibly with a heating contribution to the nozzle itself, to the cross-linking temperature which, for EVA of the type indicated, is generally of the order of 170-180°C.

The resin is thus substantially fluidized and adopts a consistency of low viscosity which favours its rapid flow into the mould cavity. When the injection pressure reaches a predetermined value, indicating that the mould is completely filled, the resin flow is abruptly interrupted. The excess pressure generated by the "water hammer" effect is absorbed by the considerable rigidity of the closure unit. By virtue of the irreversible closure, the risk of return of the closure device which could give rise to small displacements of the half-moulds and consequent formation of flash, is eliminated. If, however, excessive pressures were occasionally reached owing to incorrect regulation of the press, the resilience of the columnar elements would permit such displacement of the half-moulds and consequent attenuation of the pressure peak by the leakage of material in the fluid state.

At the same time, it is possible to keep the moulds at an operating temperature such that the injection and cross-linking times can be reduced by as much as 50% in comparison with the times used for similar moulding according to conventional techniques.

The invention thus solves the problem set and achieves many advantages in comparison with the methods offered by the prior art. In particular, a considerable increase in the productivity of each press is achieved by operating in accordance with this method. There is consequently a reduction both in the costs and in the time required for the method and better use is made both of the presses and of the workers operating them. Moreover, the mould is filled better by virtue of the lower viscosity of the resin at the higher injection temperatures, with a consequent reduction in rejects. Finally, such rejects are further reduced by the improved control of the formation of flash.

Not least, the method of the invention enables boots made of vulcanizable elastomers such as natural and synthetic rubbers to be produced by moulding. In particular, it is thus possible to make boots of such materials, lined with cotton socks, even though the male mould (in the case of boots, the portion having the shape of the foot) is supported by a single element (at the end of the leg) and the sock fitted thereon certainly cannot contribute to improving the fluidity of the rubber during the injection stage.

## Claims

1. A method of injection-moulding plastics materials, particularly hot cross-linking resins such as ethyl vinyl acetate and vulcanizable elastomers, comprising the steps of providing a press (P) for the injection of plastics materials, the press having a worm-screw plasticizer (100) and a nozzle (104) for the injection of the preselected plastics material from the plasticizer into a mould (9), arranging the mould in a closure unit (101) with irreversible mechanical closure, closing the mould (9) by means of the unit (101), injecting the resin into the mould (9), keeping the resin at a cross-linking temperature in the mould, and opening the mould after a predetermined cross-linking time, in which the temperature of the plastics material to be injected is kept at a level considerably below the cross-linking temperature in the plasticizer (100) and is heated to a temperature close to the cross-linking temperature as it passes through the nozzle (104), adopting a fluid state with low viscosity in order to be injected into the mould (9).

2. A method according to Claim 1, in which the injection stage is stopped when a predetermined pressure threshold is reached in the mould (9) or the nozzle (104).

3. A method according to Claim 1 or Claim 2 in which the heating of the plastics material passing through the nozzle (104) is achieved, mainly by pressure and internal friction, by regulation of the injection pressure of the plastics material flowing through the nozzle (104).

4. A method according to one of more of the preceding claims in which the closure unit (101) is of the type described in Italian patent application No. PD95A000153 filed on 28.07.1995 in the name of OTTOGALLI S.p.A.

5. Boots made of vulcanizable elastomer by the method of one or more of the preceding claims.

6. Boots according to Claim 5, lined with a fabric sock.
